# EUROPÄISCHE PATENTANMELDUNG

(11) **EP 2 905 117 A1**
(43) Veröffentlichungstag der Anmeldung: **12.08.2015**
(21) Anmeldenummer: 14154647.3
(22) Anmeldetag: 11.02.2014
(51) Int. Cl.: B29C 44/32, B32B 5/20, B29K 75/00

(54) **Verfahren zur Herstellung von Polyurethan-Mehrschicht-Elementen**

(71) Anmelder: Bayer MaterialScience AG, 51373 Leverkusen (DE)
(72) Erfinder: Dr. Rothe, Bernd, 50668 Köln (DE); Symannek, Achim, 42799 Leichlingen (DE); Dr. Franken, Klaus, 51467 Bergisch Gladbach (DE); Brüning, Dirk, 51377 Leverkusen (DE)
(74) Vertreter: BIP Patents

(57) **Zusammenfassung**

Die Erfindung betrifft ein Verfahren und eine Vorrichtung zur kontinuierlichen Herstellung von Mehrschicht-Elementen M, umfassend eine untere Deckschicht (D1), eine obere Deckschicht (D2) und mindestens drei, zwischen den beiden Deckschichten liegende Schichten aus geschäumten Polyurethan-Systemen, umfassend eine in der Mitte des Elementes liegende geschäumte Polyurethan-Kernschicht (K3), eine unterhalb der Kernschicht K3 und oberhalb der unteren Deckschicht D1 liegende geschäumte Polyurethan-Schicht (K1) und eine oberhalb der Kernschicht K3 und unterhalb der oberen Deckschicht D2 liegende geschäumte Polyurethan-Schicht (K2).

## Beschreibung

Die Erfindung betrifft ein Verfahren zur kontinuierlichen Herstellung von Mehrschicht-Elementen M, umfassend eine untere Deckschicht (D1), eine obere Deckschicht (D2) und mindestens drei, zwischen den beiden Deckschichten liegende Schichten aus geschäumten Polyurethan-Systemen, umfassend eine in der Mitte des Elementes liegende geschäumte Polyurethan-Kernschicht (K3), eine unterhalb der Kemschicht K3 und oberhalb der unteren Deckschicht D1 liegende geschäumte Polyurethan-Schicht (K1) und eine oberhalb der Kemschicht K3 und unterhalb der oberen Deckschicht D2 liegende geschäumte Polyurethan-Schicht (K2).

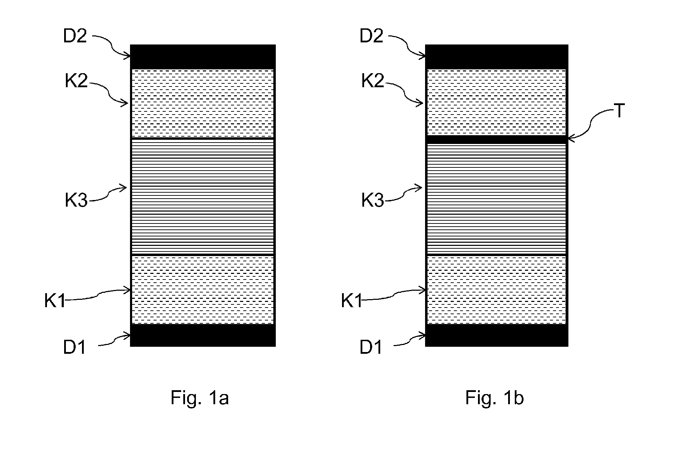

Die Herstellung von Polyurethan-Sandwichelementen (Paneelen) erfolgt im Allgemeinen in einem kontinuierlichen Prozess, wobei die Paneele endlos in einer sogenannten "Doppelband-Transportanlage" (DTB) in Dicken von in der Regel ca. 20 bis 200 mm hergestellt werden. Dicken von unter 20 mm und über 200 mm sind aber ebenfalls möglich. Das DTB besteht üblicherweise aus einem umlaufenden Oberband zur Führung der oberen Deckschicht, einem umlaufenden Unterband zur Führung der unteren Deckschicht, einer Zuführeinrichtung für die obere Deckschicht, einer Zuführeinrichtung für die untere Deckschicht, einer Formstrecke, innerhalb derer das Polyurethan-Reaktionsgemisch zwischen der oberen Deckschicht und der unteren Deckschicht aufschäumt und ausreagiert, einer Ablängeinrichtung für das hergestellte Paneel sowie einer Dosierstation mit einem Mischkopf zum Auftragen der Polyurethan-Reaktionsmischung auf die untere Deckschicht. Ein DTB nach dem Stand der Technik ist beispielsweise in Figur 1 der EP 1 518 654 A dargestellt oder auch in der deutschen Offenlegungsschrift DE 2232976 bzw. der dort zitierten Literatur beschrieben.

EP 1 518 654 A beschreibt eine Modifikation dieses Standardverfahrens, bei dem die Polyurethan - Schicht sowohl auf die Oberseite der unteren Deckschicht als auch auf die Unterseite der oberen Deckschicht aufgetragen wird. Mit diesem Verfahren sollen sich Sandwich - Paneele herstellen lassen, bei denen die geschäumte Polyurethan-Kernschicht eine besonders niedrige Rohdichte besitzt. Die Sprühapplikation auf die Unterseite der oberen Deckschicht hat jedoch den Nachteil, dass Overspray nicht zu vermeiden ist (Overspray ist der Anteil des verspritzten Materials, welcher in Form von Sprühnebel in die Umgebung entweicht).

Aus der EP 1 516 720 B1 ist ein Verfahren zur Herstellung von Sandwich-Verbundelementen bekannt, die eine erste Deckschicht und eine zweite Deckschicht aufweisen, und zwischen den Deckschichten ist ein Polyurethan-Schaumkernkörper angeordnet. Der Polyurethan-Schaumkernkörper wird durch Auftrag eines aufschäumenden Reaktionsgemisches auf eine der Deckschichten bereitgestellt. Um die Haftung zwischen dem durch das aufschäumende Reaktionsgemisch hergestellten Polyurethan-Schaumkernkörpers und den Deckschichten zu verbessern, wird vorgeschlagen, auf die Innenseite der Deckschichten einen Haftvermittler auf Polyurethanbasis aufzubringen.

Neben den bereits erwähnten beiden Deckschichten, gegebenenfalls Haftvermittlerschichten und einer Polyurethan-Kernschicht kann die Anwesenheit von weiteren Schichten im Paneel wünschenswert sein, um zusätzliche Funktionalitäten einzuführen. Im Sinne dieser Anmeldung werden solche Paneele, welche sich von den einfachen Sandwich-Paneelen durch die Anwesenheit weiterer geschäumter Polyurethanschichten unterscheiden, "Mehrschicht-Elemente" genannt.

Bei dem Mehrschicht-Element M, welches mit dem erfindungsgemäßen Verfahren hergestellt werden kann, handelt es sich um eine Platte enthaltend mehrere miteinander fest verbundene Schichten, umfassend eine untere Deckschicht (D1), eine obere Deckschicht (D2) und mindestens drei, zwischen den beiden Deckschichten liegende Schichten aus geschäumten Polyurethan-Systemen, umfassend a) eine in der Mitte des Elementes liegende geschäumte Polyurethan-Kernschicht K3 aus dem Polyurethan-System PUR3, eine zwischen der Kemschicht K3 und der unteren Deckschicht D1 liegende geschäumte Polyurethan-Schicht K1 aus dem Polyurethan-System PUR1, und eine zwischen der Kemschicht K3 und der oberen Deckschicht D2 liegende geschäumte Polyurethan-Schicht K2 aus dem Polyurethan-System PUR2. Eine Ausführungsform des beschriebenen Mehrschicht-Elementes M ist in Figur 1a dargestellt.

Die möglichen Ausführungsformen des Mehrschicht-Elements M schließen solche mit ein, bei denen eine oder beide Deckschichten D1 und/oder D2 selber aus mehreren Schichten bestehen, oder aber die Deckschichten D1 und/oder D2 vor der Herstellung des Mehrschicht-Elementes noch mit einer zusätzlichen Schicht (z.B. durch Sprühen oder Tauchen) versehen werden. Als Beispiel ist das Versehen mit einer Haftvermittlerschicht (HV) zu nennen, wie es auch im Stand der Technik beschrieben wird.

Insbesondere sind solche Ausführungsformen eingeschlossen, bei denen zwischen den geschäumten Polyurethan-Schichten, insbesondere zwischen der Kemschicht K3 und der Schicht K2, eine Trägerbahn (T) vorhanden ist. Eine Ausführungsform eines solchen Mehrschicht-Element zeigt Figur 1b.

Es fehlt jedoch bisher ein technisch einfaches und wirtschaftlich sinnvolles Verfahren zur kontinuierlichen Herstellweise für solche Mehrschicht-Elemente enthaltend mehrere geschäumte Polyurethan-Schichten.

Die Aufgabe der vorliegenden Erfindung besteht daher darin, ein einfaches und wirtschaftliches Verfahren und eine geeignete Vorrichtung zur Herstellung von Mehrschicht-Elementen zur Verfügung zu stellen.

Diese Aufgabe wird durch das erfindungsgemäße Verfahren zur Herstellung von Mehrschicht-Elementen gemäß dem Oberbegriff des Anspruchs 1 mit den kennzeichnenden Merkmalen gelöst. Für das erfindungsgemäße Verfahren lässt sich vorteilhafterweise eine Vorrichtung gemäß Anspruch 3 einsetzen. Vorteilhafte Weiterbildungen der Erfindung sind in den abhängigen Ansprüchen angegeben.

Die Erfindung betrifft ein Verfahren zur kontinuierlichen Herstellung von Mehrschicht-Elementen (M), umfassend eine untere Deckschicht (D1), eine obere Deckschicht (D2) und mindestens drei, zwischen den beiden Deckschichten liegende Schichten aus geschäumten Polyurethan-Systemen, umfassend a) eine in der Mitte des Elementes liegende geschäumte Polyurethan-Kernschicht (K3), eine unterhalb der Kemschicht K3 und oberhalb der unteren Deckschicht D1 liegende geschäumte Polyurethan-Schicht (K1) und eine oberhalb der Kemschicht K3 und unterhalb der oberen Deckschicht D2 liegende geschäumte Polyurethan-Schicht (K2), wobei
a) die beiden Deckschichten sowie eine dazwischen geführte Trägerbahn (T) kontinuierlich so in Transportrichtung gefördert werden, dass jeweils zwischen oberer Deckschicht und Trägerbahn T und zwischen Trägerbahn T und unterer Deckschicht in Transportrichtung der Deckschichten ausgedehnte Spalten entstehen,
b) das Polyurethan-System PUR1 von oben auf die Oberseite der unteren Deckschicht D1 aufgetragen wird, wo dieses zu der Schicht K1 aufschäumt,
c) das die Schicht K3 bildende Polyurethan-System PUR3 von oben auf die aufgeschäumte untere Polyurethan-Schaumschicht K1 aufgetragen wird
d) das die Schicht K2 bildende Polyurethan-System PUR2 von oben auf die Oberseite der Trägerbahn T aufgetragen wird,
e) anschließend die beiden Deckschichten mit den dazwischen liegenden Schichten K1, K2 und K3 aus den Polyurethan-Systemen PUR1, PUR2 und PUR3 in einer Formstrecke geführt werden, in der die Schichtdicken des Mehrschicht-Elements M eingestellt werden und in der die Polyurethan-Systeme ausreagieren, und
f) anschließend das ausreagierte Mehrschicht-Element abgezogen und abgelängt (vereinzelt) wird.

In einer Ausführungsform des Verfahrens wird nach Schritt d) die Trägerbahn nach dem Aufschäumen des Systems PUR2 von der Schicht K2 wieder getrennt, so dass die Trägerbahn nicht im Produkt verbleibt.

In einer anderen Ausführungsform des Verfahrens verbleibt die Trägerbahn im entstehenden Mehrschicht-Element und kann dort entsprechend ihr Beschaffenheit auch eine funktionelle Aufgabe übernehmen. In diesem Fall bietet sich eine Verklebung der Trägerbahn, zum Beispiel durch vorheriges Auftragen einer zusätzlichen Haftvermittlerschicht, an. Die Haftung kann auch oder zusätzlich durch eine teilweise oder gesamte Durchtränkung der Trägerbahn mit dem Polyurethan-System PUR2 erzielt werden.

Die Trägerbahn besteht vorteilhafterweise aus einer Folie, einem Vlies, einem Gewebe, einem Gelege oder einer anderen tragenden Schicht, welche ein Durchtropfen oder -fließen vom flüssigen Polyurethan verhindert. Die Trägerbahn kann beispielsweise aus Papier, Glas-, Kunststoff-, Kohlenstoff- oder Naturstofffasern bestehen. Die Trägerbahn kann selbst auch aus mehreren Schichten bestehen, z.B. einer tragenden Schicht und einer oder mehrerer Klebe- und / oder Haftvermittlerschichten. Soll die Trägerbahn entsprechend der Ausführungsform gemäß Anspruch 2 nach Aufschäumen des Polyurethan-Systems PUR2 von der Schicht K2 wieder getrennt werden, wird bevorzugt eine Teflon-beschichtete Folie, silikonbeschichtete Folie oder eine unpolare Folie, beispielsweise aus Polypropylen oder Polyethylen, verwendet.

Die Polyurethan-Schichten K1, K2 und K3 werden jeweils aus einem aufschäumenden Reaktionsgemisch enthaltend die Polyurethan-Systeme PUR1, PUR2 und PUR3 gebildet. Die Reaktionsmischungen für die Polyurethan-Systeme PUR1, PUR2 und PUR3 werden wenigstens aus den zusammengeführten Mischkomponenten Isocyanat und Polyol bereitgestellt, welche einen PUR- und/oder einen PIR-Schaum bilden. Die Mischkomponenten werden vorzugsweise in einem Mischkopf zusammengeführt.

Die in den Polyurethan-Systemen verwendeten, möglichen Ausgangsstoffe für die Schichten K1, K2 und K3 umfassen alle in der PUR / PIR - Chemie verwendeten Rohstoffe, mit denen sich sinnvollerweise, aus dem Stand der Technik bekannte Polyurethan - Schaummaterialien bilden lassen, aus denen Mehrschicht - Elemente hergestellt werden können.

Die Schichten K1, K2 und / oder K3 können sich dabei in ihrer chemischen Zusammensetzung und / oder in ihren physikalischen Eigenschaften unterscheiden. Daher ist es möglich, über die Zusammensetzung der einzelnen Schichten, ihre Dicke und ihre Abfolge die Eigenschaften des fertigen Mehrschicht - Elements einzustellen. Beispielsweise können die Schichten K1, K2 und / oder K3 bei ansonsten gleicher chemischer Zusammensetzung mit einer unterschiedlichen Treibmittelmenge geschäumt sein, so dass sie unterschiedliche Dichten aufweisen. Hierüber können beispielsweise die Festigkeit und das Gewicht der Platte eingestellt werden.

Es ist möglich, die Schichten K1, K2 und / oder K3 in unterschiedlicher Weise zu additivieren, beispielsweise mit Flammschutzmitteln. Die geeignete Additivierung richtet sich nach der gewünschten Anwendung und ist dem Stand der Technik zu entnehmen. Auf diese Weise kann beispielsweise der Einsatz teurer oder auf bestimmte Eigenschaften sich negativ auswirkender Additive auf das notwendige Minimum reduziert werden.

Die möglichen Ausführungsformen des Verfahrens schließen aber auch solche mit ein, bei den alle oder nur zwei der Schichten K1, K2 und / oder K3 identisch sind.

Als Treibmittel für die geschäumten Polyurethan-Schichten K1, K2 und / oder K3 können Kohlenwasserstoffe, z. B. die Isomeren des Pentans oder Fluorkohlenwasserstoffe, z.B. HFC 245fa (1,1,1,3,3-Pentaflorpropan), HFC 365mfc (1,1,1,3,3-Penta-fluorbutan) oder deren Mischungen mit HFC 227ea (Heptafluorpropan), verwendet werden. Es können auch verschiedene Treibmittelklassen kombiniert werden. Als dem aufschäumenden Reaktionsgemisch aus der Isocyanat- und der Polyolkomponente zugesetzte Co-Treibmittel können Wasser und/oder Ameisensäure oder andere organische Carbonsäuren eingesetzt werden. Als zusätzliche gasförmige Treibmittel können Kohlenstoffdioxid, Luft, Stickstoff und weitere Gase eingesetzt werden.

Ohne eine abschließende Aufstellung darzustellen, können den PUR / PIR-Reaktionsgemischen weiterhin Katalysatoren, Stabilisatoren und weitere Hilfs- und Zusatzstoffe zugesetzt werden.

Der Zusatz von Hilfs- und Zusatzstoffen, Katalysatoren und dergleichen zum Reaktionsgemisch kann vor oder während der Vermischung der Polyol- und Isocyanat-Komponenten zugeführt werden.

Die Polyurethan-Systeme aus den Reaktionsgemischen PUR1, PUR2 und PUR3 werden bevorzugt im Mischkopf vermischt und anschließend beispielsweise mit wenigstens einer Breitschlitzdüse, mit einem Sprühkopf, mit einer ruhenden oder oszillierenden Gießharke oder einem Rakel oder einem anderen aus dem Stand der Technik bekannten Austragsorgan aufgebracht.

Obere und untere Deckschicht des Mehrschicht-Elementes können aus demselben Material oder aus unterschiedlichen Materialien aufgebaut sein. Zur Bildung von Deckschichten können beispielsweise Metallbahnen oder Kunststoffmaterialien oder Papier Verwendung finden.

Mit dem erfindungsgemäßen Verfahren ist es möglich, Mehrschicht-Elemente M in einer Anlage direkt herzustellen. Hierbei besteht hohe Flexibilität in der Auswahl der Schichten und Einstellung der Schichtdicken, kombiniert mit einer präzisen und homogenen Herstellungsweise.

Die Erfindung beinhaltet weiterhin eine Vorrichtung zur Durchführung des erfindungsgemäßen Verfahrens zur Herstellung von Mehrschicht-Elementen M, welche mindestens aus einer unteren Deckschicht (D1), einer oberen Deckschicht (D2) und mindestens drei, zwischen den beiden Deckschichten liegenden Schichten (K1, K2 und K3) aus geschäumten Polyurethan-Systemen (PUR1, PUR2 und PUR3) aufgebaut sind.

Weitere, die Erfindung verbessernde Maßnahmen werden nachstehend gemeinsam mit der Beschreibung eines bevorzugten Ausführungsbeispiels der Erfindung anhand der

Figuren näher dargestellt.

Es zeigen:
- Figur 1a, Figur 1b): Beispielhafter Aufbau eines Mehrschicht-Elements M

- D1: untere Deckschicht
- D2: obere Deckschicht
- K2: geschäumte obere Polyurethanschicht
- K3: geschäumte mittlere (Kern)schicht aus Polyurethan
- K1: geschäumte untere Polyurethanschicht

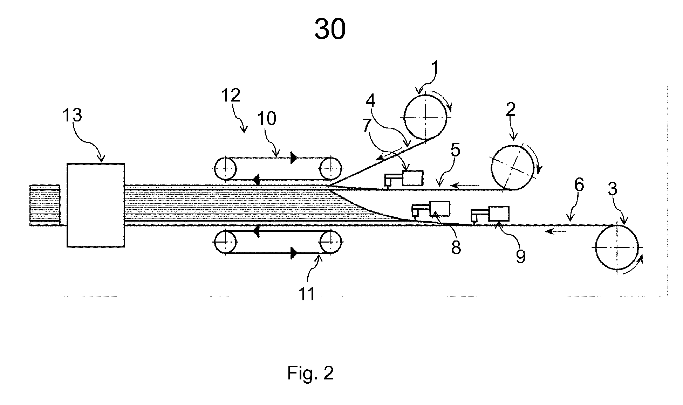

Nur Figur 1b)
- T: Trägerbahn
Figur 2 eine erfindungsgemäße Vorrichtung (30) zur Herstellung von Polyurethan-Mehrschicht - Elementen ohne Abtrennung der Trägerbahn

Hierin bedeuten:
- 1: obere Deckschichtrolle
- 2: Rolle mit der Trägerbahn
- 3: untere Deckschichtrolle
- 4: obere Deckschicht (D2)
- 5: Trägerbahn (T)
- 6: untere Deckschicht (D1)
- 7: Mischkopf zum Auftrag von PUR2
- 8: Mischkopf zum Auftrag von PUR3
- 9: Mischkopf zum Auftrag von PUR1
- 10: Obertransportband
- 11: Untertransportband
- 12: Doppelband-Transportanlage
- 13: Ablängvorrichtung

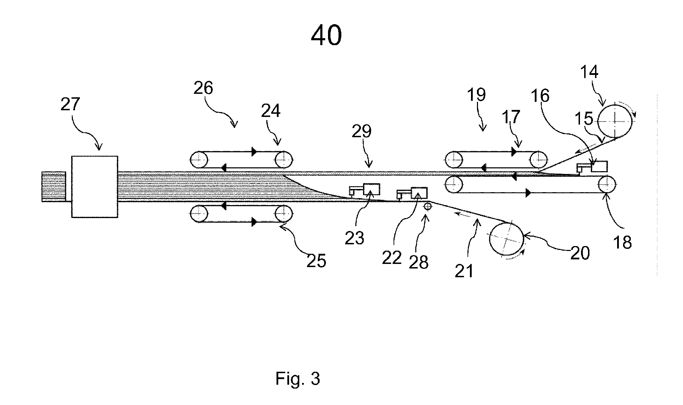

- Figur 3: eine erfindungsgemäße Vorrichtung (40) zur Herstellung von Polyurethan-Mehrschicht - Elementen mit Abtrennung der Trägerbahn

Hierin bedeuten:
- 14: obere Deckschichtrolle
- 15: obere Deckschicht (D2)
- 16: Mischkopf zum Auftrag von PUR2
- 17: Obertransportband
- 18: Untertransportband aus dem selbsttrennenden Trägermaterial
- 19: Doppelband-Transportanlage
- 20: untere Deckschichtrolle
- 21: untere Deckschicht
- 22: Mischkopf zum Auftrag von PUR1
- 23: Mischkopf zum Auftrag von PUR3
- 24: Obertransportband
- 25: Untertransportband
- 26: Doppelband-Transportanlage
- 27: Ablängvorrichtung
- 28: Umlenkrolle
- 29: obere Schicht aus Deckschicht und oberer Polyurethanschicht (D2+K2)

Figur 1a) zeigt den beispielhaften Aufbau eines Mehrschicht - Elementes M, wie es mit dem erfindungsgemäßen Verfahren hergestellt werden kann. Das nach dem erfindungsgemäßen Verfahren hergestellte Mehrschicht - Element M umfasst eine untere Deckschicht (D1), eine obere Deckschicht (D2) und mindestens drei, zwischen den beiden Deckschichten liegende Schichten aus geschäumten Polyurethan-Systemen, umfassend a) eine in der Mitte des Elementes liegende geschäumte Polyurethan-Kernschicht K3 aus der Polyurethan-System PUR3, eine zwischen der Kemschicht K3 und der unteren Deckschicht D1 liegende geschäumte Polyurethan-Schicht K1 aus dem Polyurethan-System PUR1, und eine zwischen der Kemschicht K3 und der oberen Deckschicht D2 liegende geschäumte Polyurethan-Schicht K2 aus dem Polyurethan-System PUR2. Dieser Aufbau ergibt sich beispielsweise, wenn das erfindungsgemäße Verfahren mit Abtrennung der Trägerbahn gemäß Anspruch 2 durchgeführt wird.

Figur 1b) zeigt den beispielhaften Aufbau eines Mehrschicht - Elementes M enthaltend die Trägerbahn (T), die zwischen den Schichten K2 und K3 lokalisiert ist. Dieser Aufbau ergibt sich beispielsweise, wenn das erfindungsgemäße Verfahren ohne Abtrennung der Trägerbahn durchgeführt wird.

Figur 2) zeigt eine erfindungsgemäße Vorrichtung zur kontinuierlichen Herstellung von Polyurethan-Mehrschicht - Elementen ohne Abtrennung des Trägerbands. Die Vorrichtung umfasst eine erste Deckschichtrolle (1) zur Zuführung der oberen Deckschicht D2 (4) in die Transportanlage (12), eine zweite Deckschichtrolle (3) zur Zuführung der unteren Deckschicht D1 (6) in die Doppelband-Transportanlage 12 und eine Trägerbahnrolle (2) zur Zuführung der Trägerbahn T (5) in die Transportanlage (12). Die beiden Deckschichten (4) und (6) sowie die dazwischen liegende Trägerbahn (5) werden von den jeweiligen Rollen (1), (3) und (2) kontinuierlich in einer Richtung so gefördert, dass jeweils ein Spalt zwischen Deckschichten und Trägerbahn verläuft. Die Vorrichtung umfasst weiterhin einen oberhalb der unteren Deckschicht D1 (6) angeordneten ersten Mischkopf (9) zum Auftragen des Polyurethan-Systems PUR1 auf die untere Deckschicht D1 (6) und einen in Transportrichtung weiter abwärts und oberhalb der unteren Deckschicht D1 und der Kemschicht K1 angeordneten zweiten Mischkopf (8) zum Auftragen des Polyurethan-Systems PUR3. Das Polyurethangemisch PUR1 wird mit Hilfe des Mischkopfs (9) auf die untere Deckschicht D1 aufgetragen. Nach Aufschäumen von PUR1 zur Schicht K1 wird über den Mischkopf (8) das Polyurethangemisch PUR3 auf K1 aufgetragen. Die Vorrichtung umfasst weiterhin einen zwischen der Trägerbahn (5) und der oberen Deckschicht (4) angeordneten dritten Mischkopf (7) zum Auftragen des Polyurethan-Systems PUR2 auf die Trägerbahn (5). Das Polyurethan-System PUR2 wird mit Hilfe des Mischkopfs (7) auf die Trägerbahn T (5) aufgetragen. Deckschichten und Trägerbahn durchlaufen mit den dazwischenliegenden ausreagierenden Polyurethanschichten PUR1 und PUR2 die Doppelband-Transportanlage (12), bestehend aus oberem Transportband (10) und unterem Transportband (11), welche in Pfeilrichtung rotieren. PUR3 schäumt zur Kemschicht K3 auf und die Schichtdicken werden eingestellt. Nach Ablängung (Vereinzelung) in der Ablängvorrichtung (13) werden die Mehrschicht-Elemente M erhalten.

Nicht gezeigt, jedoch selbstverständlich zu allen erfindungsgemäßen Vorrichtungen gehörend sind die entsprechenden Vorlagebehälter der jeweiligen Reaktionskomponenten, unter anderem der Isocyanat- und der Polyolkomponente(n), die Dosiereinrichtungen sowie Leitungen zur Dosierung, zu den Mischköpfen und die entsprechenden Steuerungseinrichtungen.

Figur 3) zeigt eine erfindungsgemäße Vorrichtung zur kontinuierlichen Herstellung von Polyurethan-Mehrschicht-Elementen mit Abtrennung der Trägerbahn. Die Vorrichtung umfasst eine erste Deckschichtrolle (14) zur Zuführung der oberen Deckschicht D2 in eine erste Doppelband-Transportanlage (19), bestehend aus einem unteren Transportband (18) und einem in Transportrichtung aufwärts verkürztem oberen Transportband (17). In dieser Variante zirkuliert die Trägerbahn im Sinne eines unteren Transportbands (18) einer Doppelband-Transportanlage über zwei Rollen. Die Vorrichtung umfasst weiterhin einen Mischkopf (16), der oberhalb des Transportbands (18) positioniert ist, zum Auftragen des Polyurethan-Systems PUR2 auf das untere Transportband (18). Mit Hilfe des Mischkopfs (16) wird das Polyurethan-System PUR2 auf das untere Transportband (18) aufgetragen, welche zu der Schicht K2 aufschäumt. Die Deckschicht D2 (15) wird oberhalb der Schicht K2 und kontinuierlich in Pfeilrichtung von einer Deckschichtrolle (14) gefördert und von oben mit der Schicht K2 in der Doppelband-Transportanlage (19) zusammengeführt, wobei diese aus dem Transportband (18) und dem in Transportrichtung aufwärts verkürztem Transportband (17) besteht. Nach Ausreaktion der Schicht K2 verlassen die miteinander verbundenen Schichten D2 und K2 (29) die Doppelband-Transportanlage (19), wobei K2 von der Trägerbahn getrennt wird. Die erfindungsgemäße Vorrichtung umfasst weiterhin die Doppelband-Transportanlage (26) sowie die Deckschichtrolle (20) und die Umlenkrolle (28) zur kontinuierlichen Förderung der Deckschicht D1 (21). Diese wird parallel zu der oberen Schicht (29) aus den beiden Schichten D2 und K2 in Richtung Doppelband-Transportanlage (26) geführt. Das Polyurethangemisch PUR1 wird mit Hilfe des Mischkopfs (22) auf die untere Deckschicht D1 aufgetragen. Nach Aufschäumen zur Schicht K1 wird über den Mischkopf (23) das Polyurethan-System PUR3 auf K1 aufgetragen. Die obere Schicht bestehend aus Deckschicht D2 und oberer Polyurethanschicht K2 (29), die untere Deckschicht D1 mit der darauf liegenden geschäumten Polyurethanschicht K1 sowie die dazwischenliegenden ausreagierende Polyurethanschicht K3 durchlaufen die Formstrecke bestehend aus der Doppelband-Transportanlage (26), bestehend aus oberem Transportband (24) und unterem Transportband (25), welche in Pfeilrichtung rotieren. PUR3 schäumt zur Kemschicht K3 auf und die Schichtdicken werden eingestellt. Nach Ablängung (Vereinzelung) in der Ablängvorrichtung (27) werden die Mehrschicht-Elemente M erhalten. Nicht gezeigt, jedoch selbstverständlich zu der Vorrichtung gehörend sind die entsprechenden Dosiereinrichtungen sowie Leitungen zur Dosierung der jeweiligen Reaktionskomponenten zu den Mischköpfen und entsprechende Steuerungseinrichtungen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

## Patentansprüche

1. Verfahren zur kontinuierlichen Herstellung von Mehrschicht-Elementen (M), umfassend eine untere Deckschicht (D1), eine obere Deckschicht (D2) und mindestens drei, zwischen den beiden Deckschichten liegende Schichten aus geschäumten Polyurethan-Systemen, umfassend eine in der Mitte des Elementes liegende geschäumte Polyurethan-Kernschicht (K3), eine unterhalb der Kemschicht K3 und oberhalb der unteren Deckschicht D1 liegende geschäumte Polyurethan-Schicht (K1) und eine oberhalb der Kemschicht K3 und unterhalb der oberen Deckschicht D2 liegende geschäumte Polyurethan-Schicht (K2), wobei
a) die beiden Deckschichten sowie eine dazwischen geführte Trägerbahn (T) kontinuierlich so in Transportrichtung gefördert werden, dass jeweils zwischen oberer Deckschicht D2 und Trägerbahn T sowie zwischen Trägerbahn T und unterer Deckschicht D1 in Transportrichtung der Deckschichten ausgedehnte Spalten entstehen,
b) das Polyurethan-System PUR1 von oben auf die Oberseite der unteren Deckschicht D1 aufgetragen wird, wo dieses zu der Schicht K1 aufschäumt,
c) das die Schicht K3 bildende Polyurethan-System PUR3 von oben auf die aufgeschäumte untere Polyurethan-Schaumschicht K1 aufgetragen wird,
d) das die Schicht K2 bildende Polyurethan-System PUR2 von oben auf die Oberseite der Trägerbahn T aufgetragen wird,
e) anschließend die beiden Deckschichten mit den dazwischen liegenden Schichten K1, K2 und K3 aus den Polyurethan-Systemen PUR1, PUR2 und PUR3 in einer Formstrecke geführt werden, in der die Schichtdicken des Mehrschicht-Elements M eingestellt werden und in der die Polyurethan-Systeme ausreagieren, und
f) anschließend das ausreagierte Mehrschicht-Element M abgezogen und abgelängt wird.

2. Verfahren nach Anspruch 1, **dadurch gekennzeichnet, dass** nach Schritt d) die Trägerbahn T von der Schicht K2, zu welcher das Polyurethan-System PUR2 aufgeschäumt ist, abgetrennt wird.

3. Vorrichtung zur kontinuierlichen Herstellung von Mehrschicht-Elementen M, enthaltend eine untere Deckschicht (D1), eine obere Deckschicht (D2) und mindestens drei, zwischen den beiden Deckschichten liegende Schichten aus geschäumten Polyurethan-Systemen, umfassend eine in der Mitte des Elementes liegende geschäumte Polyurethan-Kernschicht (K3), eine zwischen der Kemschicht K3 und der unteren Deckschicht D1 liegende geschäumte Polyurethan-Schicht (K1) und eine zwischen der Kemschicht K3 und der oberen Deckschicht D2 liegende geschäumte Polyurethan-Schicht (K2), umfassend
a) eine erste Deckschichtrolle (1) zur Zuführung der oberen Deckschicht in die Doppelband-Transportanlage (12), eine zweite Deckschichtrolle (3) zur Zuführung der unteren Deckschicht in die Doppelband-Transportanlage (12) und eine Trägerbahnrolle (2) zur Zuführung der Trägerbahn in die Doppelband-Transportanlage (12),
b) einen oberhalb der unteren Deckschicht (6) angeordneten ersten Mischkopf (9) zum Auftragen des Polyurethan-Systems PUR1 auf die untere Deckschicht (6),
c) einen in Transportrichtung weiter abwärts und oberhalb der unteren Deckschicht angeordneten zweiten Mischkopf (8) zum Auftragen des Polyurethan-Systems PUR3,
d) einen zwischen der Trägerbahn (5) und der oberen Deckschicht (4) angeordneten dritten Mischkopf (7) zum Auftragen des Polyurethan-Systems PUR2 auf die Trägerbahn (5),
e) eine Formstrecke bestehend aus der Transportanlage (12) enthaltend ein Obertransportband (10) und ein Untertransportband (11) zur Einstellung der Schichtdicken im Mehrschicht-Element M und Ausreaktion der Polyurethan-Systeme, und
f) eine Vereinzelungseinrichtung (13) für die Mehrschicht-Elemente M.

4. Vorrichtung zur kontinuierlichen Herstellung von Mehrschicht-Elementen M, enthaltend eine untere Deckschicht (D1), eine obere Deckschicht (D2) und mindestens drei, zwischen den beiden Deckschichten liegende Schichten aus geschäumten Polyurethan-Systemen, umfassend eine in der Mitte des Elementes liegende geschäumte Polyurethan-Kernschicht (K3), eine zwischen der Kemschicht K3 und der unteren Deckschicht D1 liegende geschäumte Polyurethan-Schicht (K1) und eine zwischen der Kemschicht K3 und der oberen Deckschicht D2 liegende geschäumte Polyurethan-Schicht (K2), umfassend
a) eine erste Deckschichtrolle (14) zur Zuführung der oberen Deckschicht in eine erste Doppelband-Transportanlage (19), bestehend aus einem unteren Transportband (18) und einem in Transportrichtung aufwärts verkürztem oberen Transportband (17),
b) einen Mischkopf (16), der oberhalb des Transportbands (18) positioniert ist, zum Auftragen des Polyurethan-Systems PUR2 auf das untere Transportband (18),
c) eine Formstrecke bestehend aus der Transportanlage (19), in der das Polyurethan-System PUR2 zu der Schicht K2 ausreagiert,
d) eine sich anschließende Doppelband-Transportanlage (26), bestehend aus einem unteren Transportband (25) und einem oberen Transportband (24), in der die obere Deckschicht D2 mit der Polyurethan-Schaumschicht K2 (29) eingeführt wird,
e) eine zweite Deckschichtrolle (20) zur Zuführung der unteren Deckschicht in die Doppelband-Transportanlage (26),
f) einen Mischkopf (22) zum Auftragen des Polyurethan-Systems PUR1 auf die untere Deckschicht D1,
g) einen in Transportrichtung weiter abwärts angeordneten Mischkopf (23) zum Auftragen des Polyurethan-Systems PUR3 auf die aus dem Polyurethan-System PUR1 aufgeschäumte Schicht K1,
h) eine Formstrecke bestehend aus der Doppelband-Transportanlage (26) zur Einstellung der Schichtdicken im Mehrschicht-Element M und Ausreaktion der Polyurethan-Systeme, und
i) eine Vereinzelungseinrichtung (13) für die Mehrschicht-Elemente M.
